# EUROPÄISCHE PATENTANMELDUNG

(11) **EP 1 440 920 A2**
(43) Veröffentlichungstag der Anmeldung: **28.07.2004**
(21) Anmeldenummer: 04000084.6
(22) Anmeldetag: 06.01.2004
(51) Int. Cl.: B65G 1/137, G06F 17/60

(54) **Verfahren und Vorrichtung zum Verpacken von Stückgutartikeln**

(30) Priorität: 07.01.2003 DE 10300164
(71) Anmelder: Westfalia WST Systemtechnik GmbH & Co. KG, 33829 Borgholzhausen (DE)
(72) Erfinder: Upmeyer, Ulrich, 33829 Borgholzhausen (DE)
(74) Vertreter: Philipp, Matthias, Dr.

(57) **Zusammenfassung**

Verfahren zum Verpacken von Stückgutartikeln, in einer Verpackung, mit den Schritten: a) Bereitstellen einer Lagerungseinrichtung (9), in der die Stückgutartikel gelagert sind, eines Lagerverwaltungsrechners (15), in dem Art und/oder Identität, Lagerposition und Größe der Stückgutartikel gespeichert sind, sowie eines Verpackungsautomaten (15), b) Auswählen einer Anzahl von in einer Verpackung zu verpackenden Stückgutartikeln und übermitteln von Art und Anzahl der Stückgutartikel an den Lagerverwaltungsrechner (5), c) Ausgeben der zu verpackenden Stückgutartikel von der Lagerungseinrichtung (9) an den Verpackungsautomaten (15), d) Ermitteln einer räumlichen Anordnung der Stückgutartikel rechnergestützt nach einer vorgegebenen Zielgröße wie z.B. minimales Gesamtvolumen einer gedachten, quaderförmigen Einhüllenden der Anordnung oder Nichtüberschreiten eines Höchstmaßes einer gedachten quaderförmigen Einhüllenden der Anordnung in einer Kantenrichtung der Einhüllenden, e) Bereitstellen einer Verpackung, die in der Lage ist, die ermittelte räumliche Anordnung aufzunehmen, und f) Verpacken der Stückgutartikel in der ermittelten räumlichen Anordnung in der Verpackung.

## Beschreibung

Die Erfindung betrifft ein Verfahren zum Verpacken von Stückgutartikeln, insbesondere Pakkungen in Apotheken, sowie eine Vorrichtung zur Durchführung eines solchen Verfahrens.

Es ist bekannt, daß Packungen in Apotheken in Lagerungseinrichtungen, wie z.B. Schubladenregalen, automatisch unter optimaler Ausnutzung des vorhandenen Platzes eingeordnet werden. So wird in DE 43 18 341 A1 ein Verfahren und eine Vorrichtung beschrieben, bei denen die Packung zunächst identifiziert und vermessen wird. Dann ermittelt ein Rechner aufgrund der Packungsgröße und des vorhandenen Platzes eine Lagerposition, an der die Pakkung mittels eines Handhabungsgeräts automatisch eingelagert wird.

Nachdem bei der Apotheke eine Anforderung über ein oder mehrere Arzneimittel eingegangen ist, können die entsprechenden Packungen aus der Lagerungseinrichtung durch unterschiedliche bekannte Verfahren und Vorrichtungen entnommen werden.

Die DE 35 33 382 A1, DE 197 43 793 A1 und DE 199 55 450 C1 beschreiben Lagerungsautomaten, in denen die angeforderten Packungen automatisch über Rutschen oder Fallschächte von den Lagerpositionen zu einem Förderband gebracht werden, das die Packungen entweder direkt oder über weitere Förderbänder zu einer Ausgabestation transportiert.

An der Ausgabestation werden die Packungen entweder per Hand in eine Verpackung eingeordnet, oder die Packungen werden automatisch, aber ungeordnet, in die Verpackung geschüttet. Dies führt entweder zu höheren Personalkosten oder zu unnötig großen Verpackungen, die den Transport erschweren können und auch die Transportkosten erhöhen.

Die Aufgabe der Erfindung besteht daher darin, ein Verfahren und eine Vorrichtung anzugeben, die ein optimiertes, geordnetes, automatisches Verpacken von Stückgutartikeln in einer Verpackung ermöglichen, und so zu einer Arbeitserleichterung und einer Kostenreduzierung führen.

Diese Aufgabe wird erfindungsgemäß durch ein Verfahren gemäß Anspruch 1 und eine Vorrichtung nach Anspruch 16 gelöst. Vorteilhafte Weiterbildungen der Erfindung sind in den Unteransprüchen aufgezeigt.

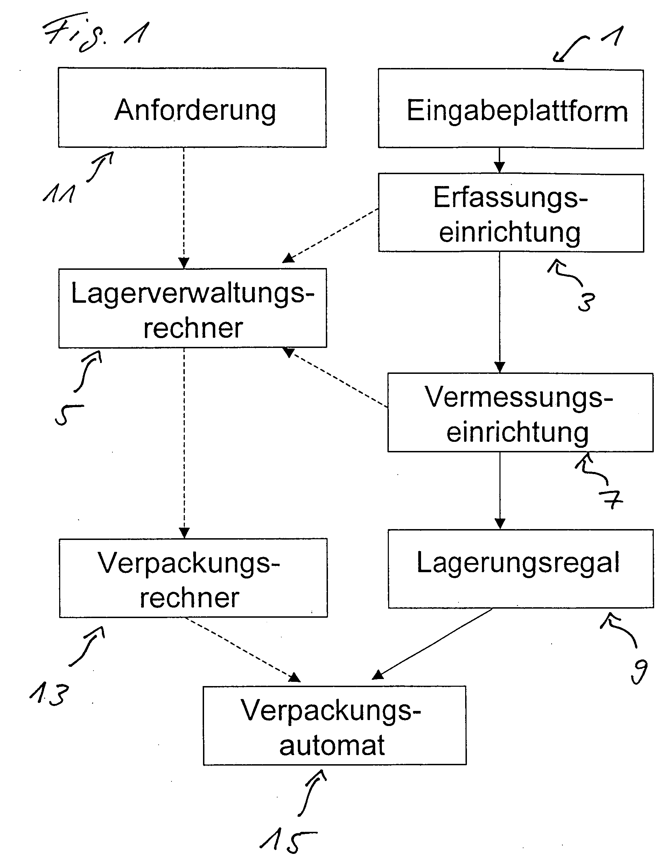

Die Erfindung wird nachfolgend anhand eines Ausführungsbeispiels erläutert, wobei auf eine Zeichnung Bezug genommen wird, in der
- Fig. 1: ein Flußdiagramm einer Ausführungsform des erfindungsgemäßen Verfahrens zeigt.

In Fig 1 stellen durchgezogene Linien den Transport eines Stückgutartikels mittels eines Handhabungsgeräts und gestrichelte Linien die Übermittlung von Informationen dar.

Stückgutartikel, hier mit Medikamenten gefüllte Packungen, werden in diesem Ausführungsbeispiel an eine Apotheke geliefert, in der die Packungen (z.B. manuell) auf eine Eingabeplattform 1 gestellt werden. Die Reihenfolge, in der die Packungen auf die Eingabeplattform 1 gestellt werden, und auch die Positionen der Packungen auf der Eingabeplattform 1 sind hierbei beliebig.

Das rechnergesteuerte Handhabungsgerät, hier ein mit Saugnäpfen und Greifarmen versehenes Regalfahrzeug, nimmt eine Packung an der Eingabeplattform 1 auf, fährt zu einer Erfassungseinrichtung 3, die mindestens ein Lesegerät, z.B. einen Scanner, aufweist, und gibt dort die Packung ab. Mit dem Lesegerät kann ein an der Packung befindlicher Barcode, beispielsweise eine Pharmazentralnummer, gelesen werden, wodurch die Art der jeweiligen Packung festgelegt ist. Da die Pharmazentralnummer auf irgendeiner Seite der Packung angebracht sein kann, muß die Erfassungseinrichtung 3 jede Packungsseite lesen können. Dazu kann die Packung z.B. auf einer drehbaren horizontalen Glasplatte gelagert sein, so daß durch Drehen der Platte und einem Lesegerät, das auf die Seitenflächen der Packung gerichtet ist, und durch zwei weitere auf die untere und obere Flächen der Packung gerichtete Lesegeräte, jede Pakkungsfläche erfaßt werden kann.

Es ist auch möglich, daß die Erfassungseinrichtung 3 sechs Lesegeräte aufweist, so daß gleichzeitig alle Seitenflächen der Packung erfaßt werden.

Die Erfassungseinrichtung 3 ist an einen Lagerverwaltungsrechner 5 angeschlossen und übermittelt die erfaßte Pharmazentralnummer an den Lagerverwaltungsrechner 5, der diese in einer Datenbank speichert.

Vor, während oder nach der Erfassung wird die Packung vermessen, wobei in der hier beschriebenen Ausführungsform des Verfahrens vorgesehen ist, daß das Handhabungsgerät die Packung nach dem Erfassungsvorgang von der Erfassungseinrichtung 3 zu einer Vermessungseinrichtung 7 transportiert, an der die Außenabmessungen der Packung bestimmt werden. Die Vermessung kann rechnergestützt und mechanisch, mit Ultraschall oder optisch erfolgen, wobei optische Meßeinheiten Lichtschranken oder Kameras sein können. In dem vorliegenden Ausführungsbeispiel lagert die Packung auf einer Glasplatte und wird durch drei CCD-Kameras, die die Packung in drei Raumrichtungen erfassen, vermessen. Die drei Kameras sind an einen Rechner angeschlossen, der aufgrund der Bilder der CCD-Kameras die Größe der Packung bestimmt.

In einer weiteren Ausführungsform könnte die Packung auf einer drehbaren Glasplatte gelagert sein. Eine parallel zu einer Seitenfläche der Packung bewegliche Lichtschranke oder eine CCD-Kamera tasten eine Seite der Packung ab. Bei Verwendung einer Lichtschranke könnte alternativ zur Bewegung der Lichtschranke die Glasplatte parallel zu der Seitenfläche bewegt werden. Danach wird der Tisch und damit die Packung um 90° gedreht und eine zweite Seite wird vermessen. Von oben und/oder unten kann gleichzeitig mit einer Lichtschranke oder einer CCD-Kamera die obere bzw. untere Fläche der Arzneimittelpackung vermessen werden. Um die Messung zu optimieren, kann eine automatische Ausrichtungseinrichtung die Arzneimittelpackung so auf den Tisch positionieren, daß die Senkrechten ihrer Außenflächen in Richtung der Lichtquelle der Lichtschranke bzw. der CCD-Kamera weisen.

In einer anderen Ausführungsform sind Erfassungseinrichtung und Vermessungseinrichtung integriert ausgebildet. Diese Kombination weist sowohl mindestens ein Lesegerät zum Erfassen eines Barcodes bzw. der Pharmazentralnummer als auch mechanische, mit Ultraschall arbeitende oder optische Meßsysteme zum Vermessen der Packung auf.

Vor, während oder nach der Erfassung bzw. Vermessung kann außerdem noch das Gewicht der Packung bestimmt werden, entweder zur erstmaligen Bestimmung oder zur Kontrolle mit einem Sollwert.

Wenn, was nicht selten vorkommt, gleichzeitig oder mit zeitlichem Abstand mehrere Packungen mit gleichem Inhalt und von gleicher Größe geliefert und erfaßt werden, d.h. Packungen gleicher Art und somit auch mit gleicher Pharmazentralnummer, soweit Packungen mit Medikamenten betroffen sind, kann es sinnvoll sein, jeder einzelnen Packung zusätzlich eine nur einmal vorkommende, individuelle Identität zuzuweisen. Denn der Art nach gleiche Packungen können sich durchaus unterscheiden, z.B. im Hinblick auf Alter, Verfallsdatum, Einlagerungsdatum usw.. Die gesamte Identität kann als Kennzeichnung auf der Packung vorhanden sein oder aber auch durch den Lagerverwaltungsrechner 5 generiert und der Packung anhand ihrer Lagerposition eindeutig zugeordnet sein, so daß bei jeglicher Handhabung Klarheit über die Identität besteht.

Demgemäß sind zweckmäßigerweise für jede Packung in dem Lagerverwaltungsrechner 5 bzw. der Datenbank eine "Art" der Packung und eine unverwechselbare "Identität" gespeichert. Auch die Speicherung der Identität allein ist denkbar, d.h. beispielsweise eine nur einmal vorkommende Kennzeichnung, Nummer u.ä..

Die Vermessungseinrichtung 7 ist mit dem Lagerverwaltungsrechner 5 verbunden und übermittelt an den Lagerverwaltungsrechner 5 die ermittelte Packungsgröße, die in der Datenbank im Lagerverwaltungsrechner 5 gespeichert wird.

Nachdem die Pharmazentralnummer und ggf. die Identität sowie die Größe der Packung in der Datenbank gespeichert worden sind, ermittelt der Lagerverwaltungsrechner 5 eine Lagerposition der Packung in einer Lagerungseinrichtung, hier einem Lagerungsregal 9. Dabei wird die Lagerposition im Lagerungsregal 9 so bestimmt, daß der vorhandene Platz optimal ausgenutzt wird, d.h. in der Regel wird jede Lagerposition nach dem zur Verfügung stehenden Platz ermittelt.

Die ermittelte Lagerposition der Packung wird an das Handhabungsgerät übermittelt, das die Packung an diese Lagerposition transportiert und dort in eine vom Lagerverwaltungsrechner 5 ermittelten Lage legt.

In der Datenbank im Lagerverwaltungsrechner 5 können neben der Pharmazentralnummer (Art der Packung), der Identität, den Abmessungen und der Lagerposition der Packungen weitere Informationen, wie z.B. das Mindesthaltbarkeitsdatum, das Verfallsdatum oder das Einlagerungsdatum, gespeichert sein. Diese zusätzlichen Daten können auf der Packung durch einen Scanner lesbar vermerkt sein, beispielsweise durch einen Strichcode, und von der Erfassungseinrichtung 3 gelesen werden.

Nachdem diese Schritte für jede angelieferte Medikamentenpackung auf der Eingabeplattform 1 durchgeführt worden sind, ist der Vorgang der Einlagerung abgeschlossen.

Wenn nun eine bestimmte Art und Anzahl bzw. Identität an zu verpackenden Stückgutartikeln bzw. an Medikamente enthaltende Packungen ausgewählt werden, z.B. durch eine Bestellung in der Apotheke, so wird diese Auswahl bzw. Anforderung 11 an den Lagerverwaltungsrechner 5 übermittelt.

Diese Übermittlung kann online erfolgen, d.h. ein Rechner, hier der Lagerverwaltungsrechner 5 ist über ein Netzwerk, beispielsweise Internet, mit einem Rechner eines Kunden verbunden. Der Kunde gibt die gewünschte Art und Anzahl an Medikamenten in seinen Rechner ein, der diese Information an den Lagerverwaltungsrechner weiterleitet. Alternativ kann die Bestellung natürlich auch in beliebig anderer Weise erfolgen, beispielsweise telefonisch, per Fax oder Email oder auch unmittelbar manuell am Lagerverwaltungsrechner. Wenn sich mehr Packungen der angeforderten und zu verpackenden Art in der Lagerungseinrichtung 9 befinden als angefordert sind, so kann der Lagerverwaltungsrechner 5 nach unterschiedlichen Kriterien bestimmen, welche Packung ausgewählt werden soll. So können z.B. Packungen mit den nächstliegenden Mindesthaltbarkeits- oder Verfallsdaten oder Packungen, die das älteste Einlagerungsdatum aufweisen, ausgewählt werden.

Der Lagerverwaltungsrechner 5 übermittelt die Art und Anzahl der zu verpackenden Packungen an einen Verpackungsrechner 13 und die Position der auszulagernden Packungen an das Handhabungsgerät.

Der Verpackungsrechner 13 ermittelt anhand der erhaltenen Art und Anzahl der zu verpakkenden Packungen eine räumliche Anordnung nach einem gewünschten Kriterium. So kann z.B. das Gesamtvolumen einer gedachten, quaderförmigen Einhüllenden der Anordnung minimiert werden. Auch kann die Anordnung so gewählt sein, daß ein Höchstmaß einer gedachten quaderförmigen Einhüllenden der Anordnung in einer Kantenrichtung nicht überschritten wird, oder daß ein erstes Höchstmaß einer gedachten quaderförmigen Einhüllenden der Anordnung in eine erste Kantenrichtung und ein zweites Höchstmaß in einer zu der ersten Kantenrichtung senkrechten zweiten Kantenrichtung nicht überschritten werden. Dadurch kann gewährleistet werden, daß, wenn beispielsweise das erste Höchstmaß 5 cm und das zweite Höchstmaß 20 cm beträgt, eine die Anordnung aufnehmende Verpackung von ihrer Größe her in einen entsprechenden Briefkastenschlitz paßt. Alternativ wird die Anordnung so gewählt, daß die Packungen in eine kleinstmögliche standardmäßige Verpackung passen.

Die ermittelte Anordnung und die diese Anordnung aufnehmende Verpackungsgröße bzw. der Verpackungstyp werden vom Verpackungsrechner 13 an einen Verpackungsautomaten 15 übermittelt. Dazu ist der Verpackungsrechner 13 mit dem Verpackungsautomaten 15 z.B. über ein Netzwerk verbunden.

Nachdem der Lagerverwaltungsrechner 5 die Lagerposition der auszulagernden Packungen an das Handhabungsgerät übermittelt hat, entnimmt dieses die Packungen aus dem Lagerungsregal 9 und gibt sie an einer Annahmestation der Verpackungsautomaten 15 ab. Die Annahmestation kann z.B. eine einfache Platte sein, von der ein geeignetes Handhabungsgerät, in diesem Ausführungsbeispiel ein Greifarm, jeweils eine Packung entnehmen kann. Der Greifarm ordnet jede Packung entsprechend der vom Verpackungsrechner 13 ermittelten Anordnung in eine Verpackung, hier ein Karton, die die vom Verpackungsrechner 13 bestimmte Größe aufweist, ein. Der Karton wird von einer Ausgabeeinrichtung, die die Kartons einem Vorrat, z.B. einem Regal oder einem Behälter, entnimmt, zur Verfügung gestellt. Dabei kann die Verpackung je nach Bedarf entweder selbst stoßdämpfendes oder wärmeisolierendes Material aufweisen oder solches Material aufnehmen, beispielsweise poröse Kunststofflocken.

Der Verpackungsautomat 15 weist mindestens einen Steuerungsrechner auf, der das Handhabungsgerät im Verpackungsautomaten 15 und die Ausgabeeinrichtung für Verpackungen steuert und mit dem Verpackungsrechner kommuniziert.

Nachdem alle zu verpackenden Stückgutartikel in der Verpackung eingeordnet sind, kann z.B. mittels einer CCD-Kamera oder eines Strichcodelesegerätes überprüft werden, ob alle zu verpackenden Stückgutartikel in der Verpackung enthalten sind. Danach wird die Verpackung verschlossen und kann automatisch durch eine Beschriftungs- und Frankiereinrichtung mit einer Versandanschrift versehen und frankiert werden. Vorab oder nach dem Verschließen der Verpackung kann zusätzlich eine Gewichtskontrolle der verpackten Waren und/oder der verschlossenen Verpackung sinnvoll sein. Hierfür können bei der Einlagerung der Packungen ermittelte Gewichtsdaten herangezogen werden, um nicht nochmals wiegen zu müssen.

In einer anderen Ausführungsform können der Lagerverwaltungsrechner und der Verpakkungsrechner auch durch einen gemeinsamen Rechner gebildet sein.

### Bezugszeichenliste

- 1: Eingabeplattform (Eingabeeinrichtung)
- 3: Erfassungseinrichtung
- 5: Lagerverwaltungsrechner
- 7: Vermessungseinrichtung
- 9: Lagerungsregal (Lagerungseinrichtung)
- 11: Anforderung
- 13: Verpackungsrechner
- 15: Verpackungsautomat

## Patentansprüche

1. Verfahren zum Verpacken von Stückgutartikeln, insbesondere Packungen in Apotheken, in einer Verpackung, mit den Schritten:
a) Bereitstellen einer Lagerungseinrichtung (9), in der die Stückgutartikel gelagert sind, eines Lagerverwaltungsrechners (15), in dem Art und/oder Identität, Lagerposition und Größe der Stückgutartikel gespeichert sind, sowie eines Verpackungsautomaten (15),
b) Auswählen einer Anzahl von in einer Verpackung zu verpackenden Stückgutartikeln und übermitteln von Art und Anzahl der Stückgutartikel an den Lagerverwaltungsrechner (5),
c) Ausgeben der zu verpackenden Stückgutartikel von der Lagerungseinrichtung (9) an den Verpackungsautomaten (15),
d) Ermitteln einer räumlichen Anordnung der Stückgutartikel rechnergestützt nach einer vorgegebenen Zielgröße, ausgewählt aus : 1) minimales Gesamtvolumen einer gedachten, quaderförmigen Einhüllenden der Anordnung, 2) kleinstmögliche standardmäßige quaderförmige Verpackung, 3) Nichtüberschreiten eines Höchstmaßes einer gedachten quaderförmigen Einhüllenden der Anordnung in einer Kantenrichtung der Einhüllenden, 4) Nichtüberschreiten eines ersten Höchstmaßes einer gedachten quaderförmigen Einhüllenden der Anordnung in einer Kantenrichtung und eines zweiten Höchstmaßes in einer zu der ersten Kantenrichtung senkrechten zweiten Kantenrichtung der Einhüllenden,
e) Bereitstellen einer Verpackung, die in der Lage ist, die ermittelte räumliche Anordnung aufzunehmen, und
f) Verpacken der Stückgutartikel in der ermittelten räumlichen Anordnung in der Verpackung.

2. Verfahren nach Anspruch 1 **dadurch gekennzeichnet, daß** nach Schritt f), bevor die Verpackung verschlossen wird, überprüft wird, daß sich sämtliche zu verpackenden Stückgutartikel in der Verpackung befinden.

3. Verfahren nach Anspruch 1 oder 2, **dadurch gekennzeichnet, daß** die Stückgutartikel identifiziert und vermessen werden, bevor die Stückgutartikel in die Lagerungseinrichtung eingelagert werden.

4. Verfahren nach Anspruch 3, **dadurch gekennzeichnet, daß** die Stückgutartikel mittels eines Strichcodes oder eines Transponders identifiziert werden, insbesondere mittels einer Pharmazentralnummer (PZN).

5. Verfahren nach Anspruch 3 oder 4, **dadurch gekennzeichnet, daß** die Stückgutartikel mechanisch, mittels Ultraschall oder optisch, insbesondere durch Scannen vermessen werden, insbesondere in drei Raumkoordinaten.

6. Verfahren nach einem der Ansprüche 3 bis 5, **dadurch gekennzeichnet, daß** die Stückgutartikel rechnergestützt vermessen werden.

7. Verfahren nach einem der vorangehenden Ansprüche, **dadurch gekennzeichnet, daß** die Stückgutartikel mittels eines durch den Lagerverwaltungsrechner (5) gesteuerten Handhabungsgeräts an einer bestimmten Lagerposition eingelagert und aus der Lagerungseinrichtung (9) ausgelagert werden.

8. Verfahren nach Anspruch 7, **dadurch gekennzeichnet, daß** die Stückgutartikel in einer bestimmten Lage eingelagert werden.

9. Verfahren nach einem der vorangehenden Ansprüche, **dadurch gekennzeichnet, daß** die Verpackung automatisch mit einer Versandanschrift versehen wird.

10. Verfahren nach einem der vorangehenden Ansprüche, **dadurch gekennzeichnet, daß** die Verpackung automatisch frankiert wird.

11. Verfahren nach einem der vorangehenden Ansprüche, **dadurch gekennzeichnet, daß** das Ausgeben der zu verpackenden Stückgutartikel an den Verpackungsautomaten (15) folgende Schritte umfaßt:
a) Prüfen, ob sich von einer zu verpackenden Art von Stückgutartikeln mehrere Stückgutartikel in der Lagerungseinrichtung (9) befinden, und wenn ja,
b) Prüfen, ob für diese Stückgutartikel unterschiedliche Verfallsdaten oder Mindesthaltbarkeitsdaten vorliegen, und
c) Ausgeben des (der) Stückgutartikel(s) mit dem (den) nächstliegenden Verfalls- oder Mindesthaltbarkeitsdaten an den Verpackungsautomaten (15).

12. Verfahren nach einem der vorangehenden Ansprüche, **dadurch gekennzeichnet, daß** das Ausgeben der zu verpackenden Stückgutartikel an den Verpackungsautomaten (15) folgende Schritte umfaßt:
a) Prüfen, ob sich von einer zu verpackenden Art von Stückgutartikeln mehrere in der Lagerungseinrichtung (9) befinden, und wenn ja,
b) Prüfen, ob diese seit unterschiedlichen Zeitpunkten in der Lagerungseinrichtung (9) lagern, und wenn ja,
c) Ausgeben des (der) am längsten in der Lagerungseinrichtung (9) lagernden Stückgutartikel(s) an den Verpackungsautomaten (15).

13. Verfahren nach einem der vorangehenden Ansprüche, **dadurch gekennzeichnet, daß** in Schritt e) eine kleinstmögliche Verpackung bereitgestellt wird.

14. Verfahren nach einem der vorangehenden Ansprüche, **dadurch gekennzeichnet, daß** in Schritt e) eine Verpackung aus Verpackungen standardisierter Größe ausgewählt wird.

15. Verfahren nach einem der vorangehenden Ansprüche, **dadurch gekennzeichnet, daß** in Schritt e) eine Verpackung bereitgestellt wird, die die Aufnahme eines stoßdämpfenden und/oder wärmeisolierenden Materials ermöglichst oder ein solches aufweist, und ggf. im Schritt f) die Stückgutartikel und/oder die Verpackung zunächst mit dem stoßdämpfenden und/oder wärmeisolierenden Material versehen wird bzw. werden.

16. Vorrichtung zum Verpacken einer Anzahl von Stückgutartikeln, insbesondere Packungen in Apotheken, in einer gemeinsamen Verpackung, mit:
a) einer Lagerungseinrichtung (9) und einem diese steuernden Lagerverwaltungsrechner (5), in dem Identität, Lagerposition und Größenabmessungen der in der Lagerungseinrichtung (9) gelagerten Stückgutartikel gespeichert sind,
b) einem Verpackungsrechner (13), der so programmiert ist, daß er eine räumliche Anordnung der Stückgutartikel nach einer Zielgröße ermittelt, ausgewählt aus: 1 ) minimales Gesamtvolumen einer gedachten, quaderförmigen Einhüllenden der Anordnung, 2) kleinstmögliche standardmäßige quaderförmige Verpackung, 3) Nichtüberschreiten eines Höchstmaßes einer gedachten quaderförmigen Einhüllenden der Anordnung in einer Kantenrichtung der Einhüllenden, 4) Nichtüberschreiten eines ersten Höchstmaßes einer gedachten quaderförmigen Einhüllenden der Anordnung in einer Kantenrichtung und eines zweiten Höchstmaßes in einer zu der ersten Kantenrichtung senkrechten zweiten Kantenrichtung der Einhüllenden,
c) einem Verpackungsautomaten (15) zum Verpacken der Stückgutartikel in der ermittelten Anordnung in der Verpackung.

17. Vorrichtung nach Anspruch 16, **gekennzeichnet durch** eine Eingabeeinrichtung (1) zum Eingeben von Art und Anzahl der zu verpackenden Stückgutartikel.

18. Vorrichtung nach Anspruch 16 oder 17, **gekennzeichnet durch** eine von dem Lagerverwaltungsrechner (45) gesteuerten Handhabungseinrichtung zum Entnehmen von Stückgutartikeln aus der Lagerungseinrichtung (9).

19. Vorrichtung nach einem der Ansprüche von 16 bis 18, **dadurch gekennzeichnet, daß** der Lagerungseinrichtung (9) eine Vermessungseinrichtung (7) zum Vermessen von einzulagernden Stückgutartikeln zugeordnet ist.

20. Vorrichtung nach einem der Ansprüche 16 bis 19, **dadurch gekennzeichnet, daß** die Vermessungseinrichtung (7) mechanisch, mittels Ultraschall oder optisch, insbesondere durch Scannen, arbeitet.

21. Vorrichtung nach einem der Ansprüche 16 bis 20, **dadurch gekennzeichnet, daß** dem Lagerverwaltungsrechner (15) eine Erfassungseinrichtung (3) zum Lesen von Etiketten, insbesondere Barcodes zugeordnet ist.

22. Vorrichtung nach einem der Ansprüche 16 bis 21, **dadurch gekennzeichnet, daß** der Lagerverwaltungsrechner (15) und der Verpackungsrechner (13) durch einen gemeinsamen Rechner gebildet sind.
